# EUROPEAN PATENT SPECIFICATION

(11) **EP 3 487 691 B1**
(45) Date of publication and mention of the grant of the patent: **04.11.2026**
(21) Application number: 17754451.7
(22) Date of filing: 19.07.2017
(51) Int. Cl.: B29C 70/08, B32B 5/00, B32B 5/02, B32B 5/26, B32B 7/12, B32B 15/08, B32B 15/14, B32B 15/20, B32B 27/12, B32B 27/40

(54) **A COMPOSITE STRUCTURE MATERIAL AND A METHOD OF MANUFACTURE THEREOF**
VERBUNDSTRUKTUR MATERIAL UND VERFAHREN ZUR HERSTELLUNG DAVON
MATÉRIAU COMPOSITE ET PROCÉDÉ DE FABRICATION ASSOCIÉ

(30) Priority: 19.07.2016 GB 201612539
(43) Date of publication of application: 29.05.2019
(73) Proprietor: Queensfield Acquisitions Limited, Bingley, West Yorkshire BD16 1PY (GB)
(72) Inventor: GANS, Adam, London Greater London NW1 3ER (GB)
(74) Representative: Lind Edlund Kenamets Intellectual Property AB
(86) International application number: PCT/GB2017/052134
(87) International publication number: WO 2018/015757

(56) References cited:
- EP-A1- 2 896 742
- WO-A1-2011/075344
- WO-A1-2015/048012
- CN-U- 203 093 210
- US-A- 5 599 585
- US-A1- 2009 110 872

## Description

### Field of the Invention

The invention relates to a coloured composite structure including a coloured composite sheet material, and a method of manufacture of such a structure.

### Background

Composite materials, and in particular carbon fibre composites, are materials that are exceptionally popular due to their structural properties. Such materials have a high strength to weight ratio and are highly versatile. Composite materials are formed of a fibrous reinforcement material embedded within a matrix material. A common example is a woven carbon fibre mat embedded in an epoxy-based matrix. Carbon fibre composites are used extensively in high performance industries such as motorsport, aviation, industrial/wind, sporting goods, and high-end consumer products.

Many composite materials have a very distinctive appearance due to the woven structure of the fibrous reinforcement material. This appearance has become desirable due to its association with high-performance products formed of composite materials. However, the appearance of carbon fibre composite materials is currently restricted by the colour of carbon fibres, which are naturally black due to the carbonization process used in its manufacture. The materials are therefore limited in their attractiveness to the creative industries.

Extensive work has been performed to produce composite materials with a bright colour, while retaining the distinctive woven fibre appearance. With regard to carbon fibre, it is believed that there is no known way to chemically modify carbon fibre so that the carbon fibre is coloured. Various attempts have been made to produce woven carbon fibre fabric that appears coloured. For example, coloured yarn may be interwoven with the carbon fibre. The result is a blurred coloured version of traditional carbon fibre. Alternatively a carbon fibre part can be painted, as it is currently on F1 cars. However, the paint hides the woven appearance of the carbon fibre material. Furthermore, paint can add substantial weight and cost to a product.

In a patent application filed by the applicant whose subject matter is disclosed in patent publication number WO2014181114, a process for the manufacture of a coloured composite structure is described. This composite structure includes a layer of woven glass fibres-between a carbon fibre composite and a coloured, translucent thermoplastic layer. The glass fibres have a white or silver coloured natural state, providing a bright backing for the thermoplastic layer. The woven glass fibres are not however as lightweight as carbon fibres, nor do they provide as much mechanical stiffness and strength to the structure as carbon fibres. Essentially the woven glass fibres would represent an intermediate layer provided to avoid having a black background to the thermoplastic layer. Therefore, the coated carbon fibre option can be considered the preferred option.

Furthermore, the patent application filed by the applicant whose subject matter is disclosed in patent publication number WO2014181114, describes a manufacturing process that employs relatively low temperatures and, as a result, relatively long cure cycles, to cure the parts. This approach may be acceptable for large parts produced in very small quantities in order to reduce energy costs. However, the cure cycles are too long for conventional parts for automotive, industrial, and sporting goods applications where large volumes require much shorter cure cycles.

Patent publication, US2009/110872A1, discloses layers of fiber prepreg with a scrim layer on top. The scrim layer is also formed of fibers, which may be metal fibers or carbon fibre. During the moulding process, resin from the prepreg is absorbed by the scrim layer and may seep through to the surface of the scrim layer, where it may form a translucent layer. The scrim layer may be thick enough so as to be opaque, or sufficiently thin that the prepreg can be seen. This combination of layers does not address the above-mentioned issues.

Patent publication, EP2896742A1, discloses applying a metal coating to a fibre substrate (e.g. carbon fibre), and then electroplating or vacuum plating a coloured layer. The result may be a surface with the texture of the fiber substrate, but a different colour. This combination of layers also does not address the above-mentioned issues.

Another known patent publication, US5599585A, discloses an elastomeric metallized fabric with a metallic coating that remains on the fabric when the fabric is stretched to an extent. This also does not address the above-mentioned issues.

An object of the present invention to address the above-mentioned issues.

### Summary of the Invention

In accordance with a first aspect of the present invention, there is provided a method as defined in claim 1.

As well as addressing the issues mentioned above, the opaque layer advantageously increases strength, reducing a likelihood of the transparent or translucent plastics material cracking.

The plastics material may be a thermoplastic material. Alternatively, the plastics material may be a thermoset material.

The applying the layer of opaque material may be performed by vapour deposition of the opaque material onto the first side of the layer of fibrous material. Alternatively, the layer of opaque material may be applied by laminating a thin foil onto the fibrous material.

The adhering the pre-preg preferably take place while the composite sheet material is in the mould.

The forming the composite sheet material into a required shape may be, for example against a surface of a mould.

The plastics material of the transparent or translucent layer may be a thermoplastic, and in this case the composite sheet material may be formed in a mould before the pre-preg is adhered. The forming of the composite sheet material may include softening the composite sheet material above the vicat softening point of the thermoplastic to facilitate shaping. For example, the forming temperature may be greater than 160°C and less than 300°C, preferably less than 200°C. The plastics material of the transparent or translucent layer may be a thermoset, and in this case the plastics material may be partially cured or uncured when located in the mould, and may then be fully cured.

The composite structure is non-planar, in particular tubular. In this case, the composite sheet material has a pair of longitudinal edges, and the method may further comprise: locating the pre-preg circumferentially around an elongate tool, wherein the adhering the pre-preg to the second side of the layer of fibrous material comprises adhering the composite sheet material over the pre-preg, wherein the composite sheet material is shaped so that the longitudinal edges are located close together when the composite sheet material is located over the pre-preg, wherein, during the curing and/or the longitudinal edges are close together such that after curing or forming the transparent or translucent material at the longitudinal edges is fused together.

Where the composite structure is tubular, the composite sheet material may be shaped so that the longitudinal edges overlap. In this case, the transparent or translucent layer preferably softens during curing such so the longitudinal edges fuse together in such a way that the join is substantially invisible.

In any of the methods of making a composite structure mentioned above, the pre-preg may be a thermoset pre-preg. In this case, the curing is performed at a temperature of at least 85°C and less than 165°C, preferably less than 150°C.

The plastics material layer may also be a thermoset layer. In this case the curing is also performed at a temperature of at least 85°C and less than 165°C, preferably less than 150°C.

Alternatively, the pre-preg may be a thermoplastic pre-preg and also the plastic material layer may be thermoplastic material. In this case, the forming of both the thermoplastic pre-preg and also the plastic material layer may be performed together at a temperature from 160°C to 300°C, preferably less than 220°C, preferably still less than 200°C.

However, the plastics material layer may be thermoplastic material while the pre-preg is a thermoset pre-preg. In this case, the curing of the thermoset pre-preg may preferably be performed at a temperature that does not exceed a vicat softening point of the thermoplastic material.

According to a second aspect of the present invention, there is provided a a composite structure as defined in claim 11.

The pre-preg may be a thermoset pre-preg. In this case, the curing is performed at a temperature of at least 85°C and less than 165°C, preferably less than 150°C.

The pre-preg may be a thermoplastic pre-preg and the plastic material layer may be a thermoplastic material. In this case, the curing and forming may be performed at a temperature from 160°C to 220°C, preferably less than 200°C.

The plastics material layer may be formed of thermoplastic material. Where the pre-preg is a thermoset pre-preg, the curing of the thermoset pre-preg is preferably performed at a temperature that does not exceed a softening point of the thermoplastic material.

In any aspect of the invention, the opaque layer may be a metal layer, preferably a single element metal layer, preferably consisting of one of: aluminium, nickel, chromium, tin, indium, silver, gold and platinum. The opaque layer may be less than 100 nanometres in thickness. The opaque layer may be greater than 10 nanometres in thickness.

In any aspect of the invention, the layer of plastics material is preferably translucent and coloured.

In any aspect of the invention, the fibrous material is preferably a woven fibrous material or a non-woven sheet of unidirectional fibres. The fibrous material may comprise one or more of: carbon fibre, fibreglass, polypropylene, aramid and boron. Individual tows in the woven fibrous material may be comprised entirely of fibre or be stabilized by some form of agent. Alternatively, the tows may be impregnated by a thermoplastic or thermoset resin prior to weaving. Where the tows are impregnated, thermoplastic resin is preferred due to its inherent non-tacky nature.

In any aspect of the invention, the pre-preg may be a thermoset or thermoplastic carbon fibre prepreg.

### Brief Description of the Figures

For better understanding of the present invention, embodiments will now be described, by way of example only, with reference to the accompanying Figures in which:
Figure 1 is an illustrative cross-sectional view of a coloured carbon fibre composite sheet; and
Figure 2 is flowchart indicating steps in a process of manufacturing a composite sheet material in accordance with an embodiment;
Figure 3 is a flowchart indicating steps in a process of manufacturing a composite sheet material in accordance with another embodiment;
Figure 4 is a flowchart indicating steps in a process of manufacturing a composite sheet material in accordance with another embodiment; and

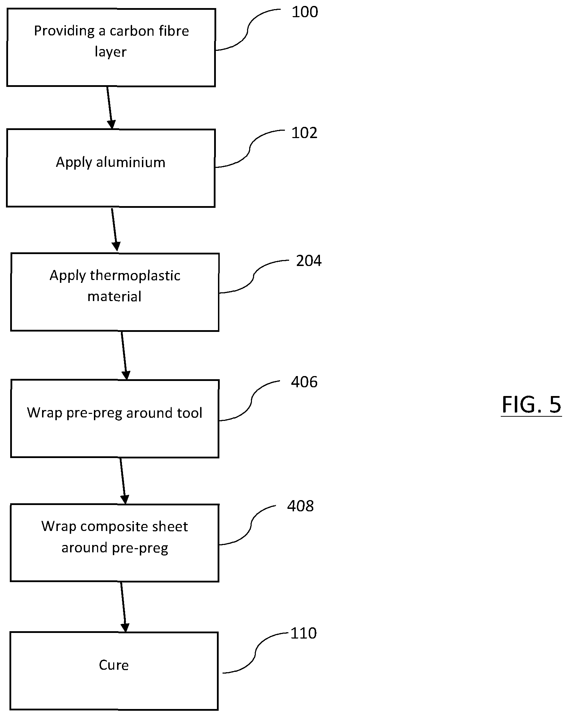

Figure 5 is a flowchart indicating steps in a process of manufacturing a composite sheet material in accordance with another embodiment.

### Detailed Description of Embodiments

Like steps are denoted by like reference numerals throughout.

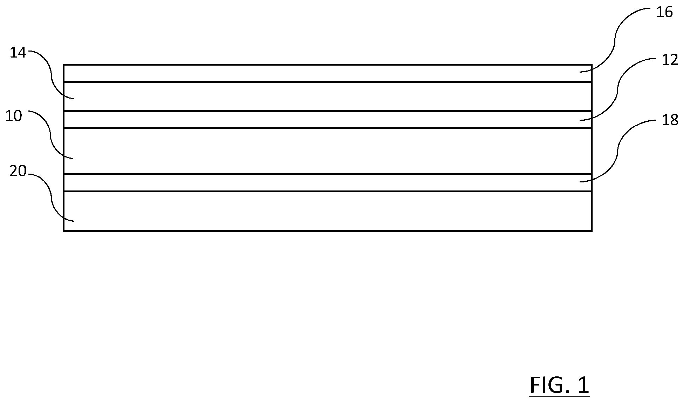

Various carbon fibre composite structures and their manufacture will be described in the following, in accordance with different embodiments of the invention. In Figure 1 a cross-sectional view of a coloured carbon fibre composite sheet is illustrated, which retains the structural qualities of conventional carbon fibre composites, but provides a high-quality coloured appearance. The illustration of Figure 1 will be used in the description of several different embodiments.

The composite sheet includes a carbon fibre layer 10, an aluminium layer 12 and a translucent layer 14. A first side of the aluminium layer 12 is located on a first side of the carbon fibre layer 10. A first side of the translucent layer 14 is located against a second side of the aluminium layer 12, opposite to the carbon fibre layer 10. A protective finish layer 16 is located on a second side of the translucent layer 14, opposite to the aluminium layer 12, providing an exterior viewing face.

A composite layer 20 is bonded to a second side of the carbon fibre layer 10 by a layer of adhesive film 18. The composite layer 20 is in order to produce composite parts or structures using the composite sheet material as an outer.

The carbon fibre layer 10 is formed of woven carbon fibre filaments. The carbon fibre may be woven into a twill (e.g. 2/2), satin or plain or other kind of weave. Alternatively, the carbon fibre may be a unidirectional non-woven fabric.

The aluminium layer 12 provides a bright, neutral backing colour viewable through the translucent layer 14. The translucent layer 14 may be coloured. The translucent layer 14 and the aluminium layer 12 cooperate to provide a colour to the composite sheet, which is different to the colour of the woven carbon fibre. Where the translucent layer 14 is clear, the overall colour of the composite material is the colour of aluminium, that is, silver. In embodiments, rather than being translucent, the layer 14 may be transparent.

Although Figure 1 suggests that the aluminium layer 12 is a planar layer located on a planar surface of the carbon fibre layer 10, in practice this will not be the case as the surface of the carbon fibre layer 10 is textured. The aluminium layer 12 is in the form of a thin coating, and the contours or patterns of the fibres of the underlying carbon fibre layer 10 can be clearly seen. This results in the composite material having a highly distinctive appearance. Preferably, the aluminium layer is greater than 10 nanometres in thickness. Preferably the aluminium layer is less than 100 nanometres in thickness. Since the aluminium layer 12 is very thin, it adds little to the weight and volume of the composite sheet. The aluminium also usefully does not deform on heating during the forming/curing processes.

The translucent layer 14 is formed of thermoplastic material. The colour of the translucent layer 14 may be present as an inherent characteristic of the particular thermoplastic, or be provided by addition of a pigment to a thermoplastic resin, for example. Embodiments of the invention are not limited to any particular way in which the translucent layer is coloured. The thermoplastic may be thermoplastic polyurethane (TPU), for example. As well as cooperating with the aluminium layer to provide colour, the translucent layer 14 serves to protect the aluminium layer 12.

The finish layer 18 provides an aesthetically improved finish and increases the hardness of the exterior surface. Typically, the finish layer 18 is a lacquer such as polyurethane. In variant embodiments, the finish layer 18 is omitted.

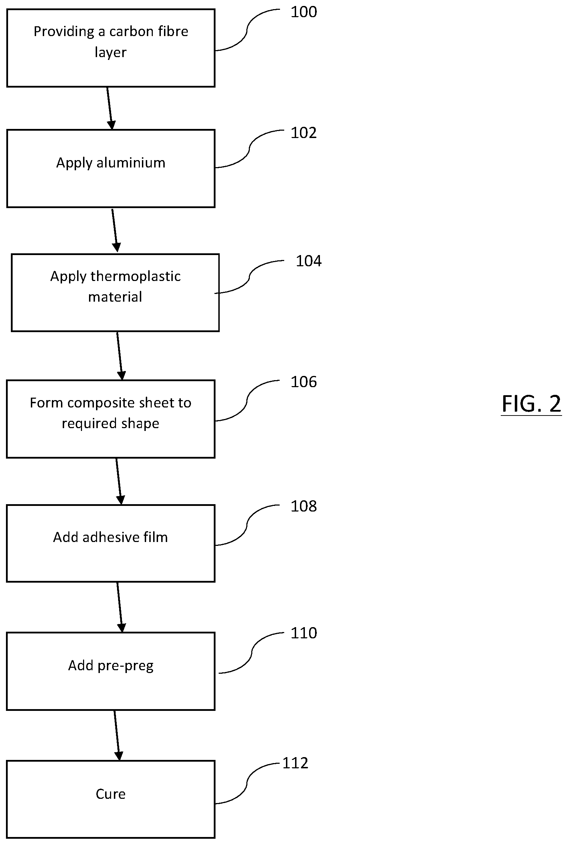

Production of the composite sheet material and then a composite structure incorporating the composite sheet material will now be described according to a first production process. Referring to Figure 2, at step 100 the carbon fibre layer 10 is provided. The carbon fibre layer 10 is woven, for example in a twill weave, or formed of a unidirectional non-woven fabric, in a way that is known in the art.

At step 102, the aluminium layer 12 is then applied to the carbon fibre layer 10 by vapour deposition. In the vapour deposition, the carbon fibre layer 10 is passed over a source of gaseous aluminium and the gaseous aluminium condenses on the first side of the carbon fibre layer 10, for example using a roll-to-roll web system. The amount of aluminium deposited can be precisely controlled, for example by controlling the speed at which the carbon fibre layer 10 is passed over the source, amongst other factors.

The translucent layer 14 is applied using a filming and laminating process at step 104. In this process thermoplastic is extruded into a film, and then heated and pressed onto the second side of the aluminium layer 12. The film is preferably from 0.1mm to 10mm in thickness, preferably still from 0.25mm to 0.3mm.

The composite sheet is then formed into a required shape at step 106 by laying the composite sheet in a mould. The composite sheet may also be cut before being put into the mould. The composite sheet may be thermoformed into the required shape using heat and/or vacuum to ensure a good fit with the mould and the required surface finish. For example, the composite sheet may be heated to 150°C to soften the thermoplastic layer 14 and enable formation into the required shape. An intensifier, for example a silicon mandrel or match-moulded component, may be utilised to compress the composite against the mould in order to obtain the required conformity against the surface of the mould. If a planar shape is required, step 106 may be omitted.

To form the composite structure, at step 108 the adhesive film 18 is adhered to the second side of the carbon fibre layer 10. At step 110 a layer of uncured composite material in the form of carbon fibre thermoset pre-preg is laid up over the composite sheet and adhered to the composite sheet with the adhesive film 18. The carbon fibre thermoset pre-preg comprises carbon fibre reinforcement, which may be a woven carbon fibre fabric or may be in a unidirectional non-woven form, and a thermoset resin such as epoxy resin. Typically, the pre-preg is in a B-stage, partially cured form, when it is laminated on top of the composite sheet. In this case, since the B-stage pre-preg is only partially cured, it remains tacky. In some cases, the tacky surface of the pre-preg will allow omission of the adhesive film 18 during the lamination process meaning that step 108 is omitted. A continuous bond between the thermoset pre-preg and the second side of the carbon fibre layer 10 is achieved using a conventional lamination / lay-up and shaping technique. The end-result is a composite "pre-form" ready for curing.

At step 112, the pre-form is then cured in the mould using heat and/or a vacuum in accordance with known techniques, to form a cured composite piece. The curing temperature in the mould is preferably below the softening point of the material of the thermoplastic layer, so that thickness of the thermoplastic layer 14 is maintained. The curing is performed at a temperature greater than 85°C, which may be greater than 100°C. The curing is performed at a temperature less than 155°C, which may be less than 135°C. Generally, the higher the temperature, the shorter the curing time needed and the precise temperatures and pressures defined may depend on the particular carbon fibre pre-preg that is used. At 155°C, the composite material may be heated for 5 to 30 minutes to result in the composite piece. At 85°C, the heating may be for 8 hours. The pressure applied is typically 1 bar to 10 bars.

It is mentioned above that the composite sheet may be heated, for example, to 150°C, to soften the thermoplastic layer 14 and enable formation into another shape. However, the composite sheet may be heated to a higher temperature. In optional additional steps taking place after step 106 and before steps 108 and 110, a two step heating process may be used in which the composite sheet is heated in the mould to at least 150°C, preferably at least 160°C, and possibly at least180°C and preferably below 220°C, possibly below 200°C, so that the composite sheet softens substantially and a new shape can be achieved. The composite sheet may then be cooled down to an ambient temperature, and removed from the mould and inspected. In the event of imperfections in the thermoformed composite sheet, the composite sheet can be discarded. The imperfections may be cosmetic, for example flaws viewable from the exterior side of the translucent layer 14. Such flaws might be, for example, damage to the aluminium layer 12 or the translucent layer 14, which render the composite sheet unsuitable for continued production. The imperfections may also be structural. Discarding the composite sheet at this stage means that subsequent steps are not performed and no additional material used in sub-layers is wasted. If the formed composite sheet is acceptable, that is, there are no imperfections meaning that the sheet should be discarded, the sheet is returned to the mould (or put into another mould), and the production process continues at step 108.

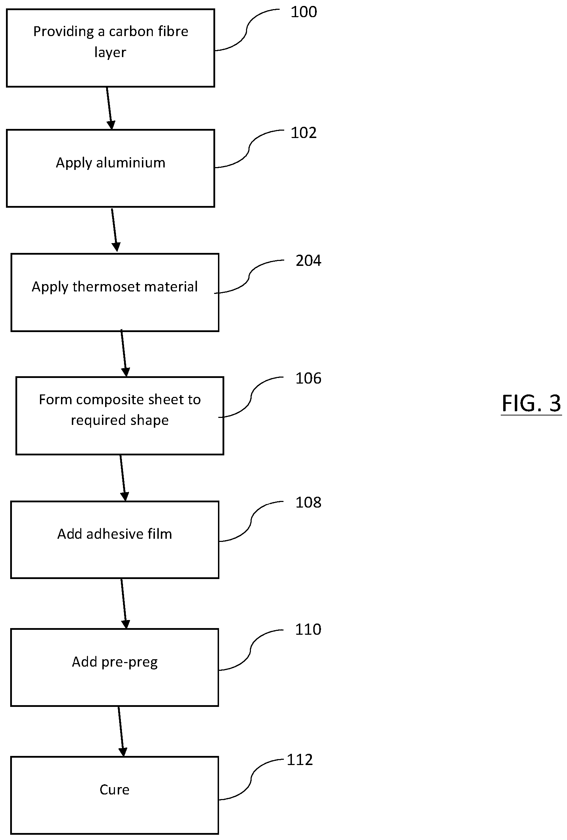

In another embodiment, instead of the translucent layer 14 of the composite structure being formed of thermoplastic material, the translucent layer 14 is formed of thermoset plastic material. Referring to Figure 3, in step 204 the translucent layer 14 is applied using a high precision filming and laminating process in which thermoset resin is extruded into a film, and then heated and pressed onto the second side of the aluminium layer 12. The film is preferably from 0.1mm to 10mm in thickness, preferably still from 0.25mm to 0.3mm. In general, same or similar laminating conditions may be used as in embodiments in which the layer 14 is formed of thermoplastic. However, temperatures are generally lower.

The thermoset translucent layer 14 is partially cured after being laminated onto the aluminium layer 12, that is, is at B-stage. This is due to the thermoset material having already been heated during the lamination process. The partially cured thermoset layer 14 may, for example be 30-40% cured. The thermoset layer being partially cured before being laid up in the mould is advantageous in that the surface of the thermoset layer 14 is tacky and can easily be placed in the mould. Also, the composite sheet is more stable for handling and the time required to cure the thermoset layer in the mould is reduced.

In practice, such composite sheets with the partially cured pre-preg may be made by one party and then supplied to another. That other party may then perform the subsequent steps in the production process.

In some embodiments, an additive may usefully be added to the thermoset translucent layer 14 to increase the viscosity of the thermoset translucent layer 14 during curing, such that the viscosity of the thermoset material of the translucent layer 14 is greater than a threshold viscosity. The thermoset material better maintains its thickness where such an additive is used.

The pre-preg making up the composite layer 20 that is applied to the second side of the carbon fibre layer 10 in step 110 may be a B-stage thermoset pre-preg. In this case, advantageously the curing conditions required may be very similar or the same as those required to cure the B-stage thermoset material of the translucent layer 14. Where the additive is used to increase viscosity of the thermoset material of the translucent layer 14, the viscosity of thermoset material in the pre-preg is preferably less than the viscosity of the thermoset material of the translucent layer 14, so that the thermoset material of the pre-preg of the composite layer 20 flows during curing but that of the translucent layer 14 substantially does not.

In other embodiments, instead of using an additive to change viscosity of the thermoset material of the translucent layer 14, the curing conditions may be configured to restrict flow.

In a variant embodiment, a thermoplastic pre-preg may be applied to the second side of the carbon fibre layer 10 instead of a thermoset pre-preg. As described above, the viscosity of the thermoset material of the translucent layer 14 may be modified or flow restricted in view of curing conditions.

In variant embodiments, a similar two-step process to that described above may be performed to enable the composite sheet material to be inspected before the pre-preg of layer 20 is added in step 110. In this case, the composite sheet including the translucent layer 14 of thermoset material is laid up in a mould and the composite sheet is fully cured. The composite sheet is then removed from the mould and inspected for flaws. Provided the composite sheet is acceptable, the composite sheet is then returned to the mould and the pre-preg (thermoset or thermoplastic) is added to the second side of the carbon fibre layer 10 to form the composite layer 20 and the pre-preg is cured or formed in the mould. In a variant, the cured composite sheet may be located in a different mould after being removed, and the pre-preg cured or formed in that mould.

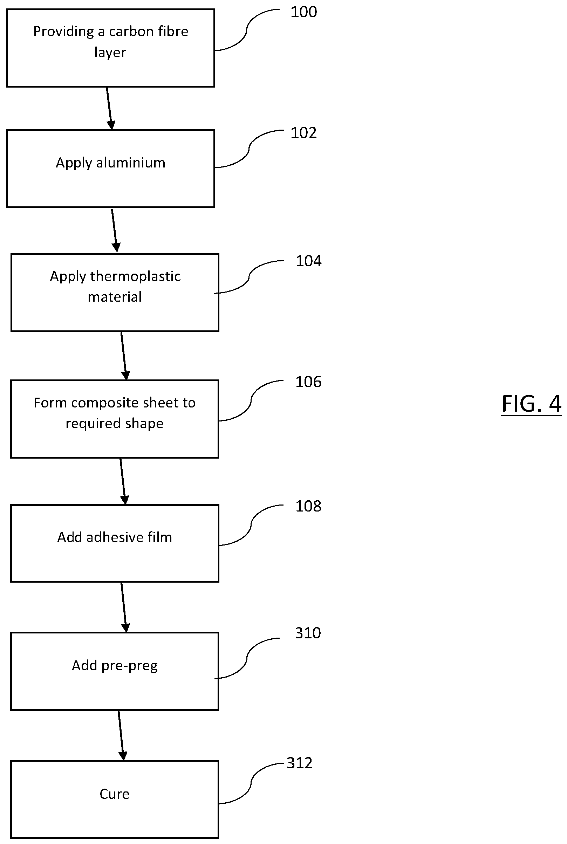

In another embodiment, the translucent layer 14 of the composite structure is formed of thermoplastic material like in the embodiment described with reference to Figure 2. In this other embodiment the carbon fibre pre-preg 20 is a thermoplastic pre-preg instead of thermoset pre-preg. Referring to Figure 4, in step 310 a carbon fibre thermoplastic pre-preg 20 is laid up over the composite sheet. Also, in step 312, the composite sheet and the carbon fibre pre-preg of composite layer 20 are formed at a temperature greater than 160°C. The forming temperature is less than greater 220°C, preferably less than 200°C. An absence of thermoset material in favour of thermoplastic material allows a higher forming temperature to be used, resulting in a faster cycle for parts. The forming cycle will be driven by the ability of the press to apply heat up the parts, and is preferably at least one minute and less than 30 minutes. The length of the forming cycle is dependent on the melting temperature and the particular thermoplastic material or materials used. In a preferred embodiment, the type of thermoplastic used for the translucent layer 14 is the same as the thermoplastic used in the pre-preg, for example TPU (thermoplastic polyurethane). In this case, the same forming conditions are appropriate for both these parts of the composite structure.

While the thermoplastic pre-preg of composite layer 20 and the thermoplastic material of the translucent layer 14 may be formed in the same forming step in a mould, a similar two-step process to that described above may be performed to enable the composite sheet material to be formed and inspected before the pre-preg of layer 20 is added in step 110. In this case, the composite sheet is first formed in a first step of applying heat and pressure, inspected for flaws, and then the steps 310 and 312 performed. The temperatures used are typically in the ranges for forming thermoplastics mentioned above, e.g. 160-220°C.

In another embodiment, a tubular structure is formed of composite sheet material having the cross-section illustrated in Figure 1. The translucent layer 14 is formed of thermoset plastic. To produce the tube, first a composite sheet is made as described with respect to Figure 3 in steps 100, 102 and 204, where the thermoset plastic is partially cured, that is, at B-stage.

A carbon fibre thermoset pre-preg is then wrapped around a mandrel at step 406. This is done by winding carbon fibre sheets pre-impregnated with thermoset resin around the mandrel. The tacky nature of the pre-preg helps hold down the material onto the mandrel during the wrapping process..

Alternatively, dry carbon fibre filaments or fabrics may be wrapped around the mandrel and impregnated with thermoset resin in a secondary step.

The coloured composite sheet is then wrapped around the mandrel, over the pre-preg at step 408. Longitudinal edges of the composite sheet are then adjacent or slightly overlapped. The composite sheet may be cut before being wrapped around, or after. The composite sheet may be heated to soften the translucent layer 14 to facilitate wrapping, for example the composite sheet may be heated to 50°C. An adhesive may be applied to the second side of the carbon fibre layer 10, although the tackiness of the thermoset resin may render this unnecessary. Preferably, the longitudinal edges of the composite sheet overlap by 0mm and no more than 2mm.

After the composite sheet has been wrapped around the mandrel, the mandrel with the composite sheet wrapped around is put into a corresponding female mould or otherwise contained, for example with plastic OPP (oriented polypropylene) tape. The mandrel is then heated and the composite sheet and the pre-preg are fully cured at step 410, with the temperature being in the same ranges as at step 112. The translucent layer 14 softens and the longitudinal edges fuse together such that there is no or little visible join between the two longitudinal edges.

The tubular structure may be a cylindrical tube or have another kind of tubular cross-section. A similar method may be used to make composite structures having other shapes.

In all the embodiments described above, after the composite structure has been cured and removed from any mould or autoclave, the finish coating 16 may then be applied to the exterior surface of the translucent layer 14 in an additional step. In variant embodiments however, the finish coating 16 may be omitted and thus this step omitted.

Various modifications may be made to the embodiments described above.

In the carbon fibre layer 10, the carbon fibre may be mixed or interwoven with other kinds of fibrous material, such as glass fibres, aramid, polypropylene or boron. In alternative embodiments that may be preferred for certain applications, the layer 10 may not be formed of carbon fibres, but instead alternative fibrous material, such as glass fibres, polypropylene, aramid or boron. The layer 10 may include a combination of two or more kinds of fibrous material such as carbon fibre, aramid, fibre glass, polypropylene and boron. The layer 10, whether including or excluding carbon fibre, may be formed of a fibrous mat including short fibres of any one or more of these fibrous materials or unidirectional non-woven fibre.

In alternative embodiments, the layer 12 may be formed of an opaque material other than aluminium, preferably but not necessarily a single element metal layer. For example, the layer may be formed of one of: nickel, chromium, tin, indium, silver, gold and platinum. Like aluminium, materials of colour different to aluminium will cooperate with the translucent material to give the composite sheet a colour when an exterior face of the translucent layer 14 is viewed. Such metals can be applied to the fibrous layer 10 using vapour deposition techniques.

In variant embodiments, the aluminium layer 12 can be otherwise applied to the first side of the carbon fibre layer 10. The aluminium layer 12, or alternatively a layer of any of the mentioned metals, could be applied by anodization. It may also be possible to apply the aluminium or other metal layer 12 while retaining the distinctive appearance of the underlying fibrous material by providing a thin foil and applying an adhesive layer to the first side of the foil and then pressing that side tightly against the first side of the carbon fibre layer 10, for example by applying high air pressure against the second side of the foil. Metal particles may alternatively be sprayed onto the first side of the carbon fibre material 10. Embodiments of the invention are not limited to any particular way in which the aluminium, or in variant embodiments other metal or material, is applied.

The pre-preg of layer 20 need not be carbon fibre pre-preg, but instead may be another kind of fibrous reinforcement pre-impregnated with a resin. For example, the fibrous reinforcement may be aramid, polypropylene, boron or fibreglass. The fibrous reinforcement may be a combination of fibrous materials, which may include one or more of carbon fibre, fibreglass, polypropylene, boron and aramid. Common resins for thermoplastic pre-pregs include TPU, PP, PET, PE, PPS, and PEEK. A common resin for thermoset pre-preg is epoxy resin. Other thermoset and thermoplastic resins are known in the art.

Where the selected pre-preg is adhesive by its nature and bonds to the composite sheet during the curing step, it may not be necessary to include the adhesive layer 18. In this case, the adhesive layer 18 and thus the step 110 of applying the adhesive layer 18 may be omitted. For example, where the carbon fibre pre-preg is impregnated with an epoxy resin, the adhesive layer 10 may be omitted.

The composite structures made according to the above described processes retain the structural qualities of conventional carbon fibre composites, but provide a high-quality coloured appearance.

During curing at certain temperatures the pre-preg from which the composite layer 20 is made may transfer through the fibrous layer 12. The presence of the aluminium layer prevents colour degradation from this. However, transfer of the pre-preg into the fibrous layer 12 may also advantageously increase the mechanical strength of the composite structure and is thus desirable. Also, in the absence of the aluminium layer 12, material of the translucent layer 14 material of the layer 14 may transfer during forming or curing, also resulting in colour degradation. The aluminium layer 12 prevents this.

Use of thermoplastic or thermoset material to form the translucent layer 14, and use of thermoplastic or thermoset pre-preg in the layer 20 depends on the particular application. Use of thermoset pre-preg has an advantage over use of thermoplastic pre-preg since thermoset resin is tacky and can be easily adhered to a second side of the carbon fibre layer 10, meaning that need the adhesive layer 18 can often be omitted. Cured thermoset also typically has better mechanical properties than formed thermoplastic. However, use of thermoplastic only in the composite structure has an advantage since where only thermoplastic is present the composite structure can be formed faster at a higher temperature. Also, as there is no chemical reaction when thermoplastic is used, undesirable by products are not produced. Also, where thermoplastic is used in the translucent layer 14, the thickness of that layer is typically better maintained in the finished composite structure. Since variation in thickness causes darker and lighter patches in the colour of the translucent layer 14, use of thermoplastic material in the layer 14 may result in a better appearance than use of thermoset material.

Herein it should be understood that where the composite structure includes a thermoset composite layer 20 and/or the translucent layer 14 is formed of thermoset material, a curing step is required. Where thermoplastic is used in the pre-preg or in the translucent layer 14, this is formed rather than cured. Use of the words "form" and "cure" should be construed accordingly in context.

The forming and/or curing steps described above may be performed in an autoclave. Alternatively, they may be performed using an out-of-autoclave process. For example, a resin transfer moulding (RTM) process may be used. A hot press may also be used. Also, a vacuum infusion process may be used. The steps of shaping the composite sheet, where the structure is to be non-planar, and of forming and/or curing may be performed using other known processes.

Although outside the scope of the present claims, the processes mentioned above may be modified to exclude the opaque layer, which may be the aluminium layer, from the composite sheet material. In this case, the translucent or transparent layer may be formed or cured directly onto the woven fibre. Some novel and advantageous composite sheet materials and structures may result from the processes mentioned above despite absence of the opaque layer.

In view of the foregoing description it will be evident to a person skilled in the art that various modifications may be made within the scope of the invention defined by the appended claims.

## Claims

1. A method of making a composite structure, comprising:
shaping a composite sheet material into a required non-planar shape, the composite sheet material comprising a layer of fibrous material (10), an opaque layer (12) of opaque material and a layer of translucent plastics material (14), wherein a first side of the layer of opaque material (1) is coupled to a first side of a layer of fibrous material (10) and the layer of plastics material (14) is located against a second side of the layer of opaque material (12);
adhering a pre-preg to a second side of the layer of fibrous material; and
curing and/or forming the pre-preg and the composite sheet material to form the composite structure,
wherein the side of the layer of opaque material (12) is viewable through the layer of plastics material (14),
wherein the opaque layer (12) is a different colour to the colour of the fibrous material, and the opaque layer (12) and the layer of translucent plastics material (14) cooperate to provide the composite sheet material with a coloured appearance, and
wherein the first side of the fibrous layer (10) is textured, and
wherein the layer of opaque material (12) is coated on the first side of the fibrous layer (10) so that contours of the side of the opaque material correspond to the textured shape of the first side of the fibrous material layer (10).

2. The method of claim 1, further comprising making the composite sheet material, wherein the making comprises:
applying (102) the opaque layer (12) to the first side of the layer of fibrous material (10);
applying (104; 204) the layer of translucent plastics material (14) on the side of the opaque material (12) opposite the layer of fibrous material (10).

3. The method of any one of the preceding claims, wherein the opaque layer (12) consists of one of: aluminium, nickel, chromium, tin, indium, silver, gold and platinum.

4. The method of any one of the preceding claims, wherein the composite sheet material of any one of the preceding claims, wherein the fibrous material comprises at least one of: carbon fibre, fibreglass, aramid, polypropylene and boron.

5. The method of any one of the preceding claims, wherein the fibrous material comprises carbon fibre.

6. The method of claim 2 or one of claims 4 and 5 when dependent on claim 2, wherein the applying the opaque layer (12) of opaque material is performed by vapour deposition of the opaque material onto the first side of the layer (10) of fibrous material.

7. The method of any one of the preceding claims, wherein the plastics material is a thermoset material, and after the applying of the thermoset material, the thermoset material is partially cured.

8. The method of any one of the preceding claims, wherein the plastics material of the translucent layer (14) is a thermoplastic, wherein the shaping includes heating the composite sheet material above the softening point of the thermoplastic.

9. The method of any one of the preceding claims, wherein the layer of translucent plastics material is formed of thermoplastic extruded in a film, wherein the film is 0.1mm to 10mm in thickness.

10. The method of claim 9, wherein the film is from 0.25mm to 0.3mm in thickness.

11. A composite structure comprising:
shaped, non-planar composite sheet material comprising:
a layer of fibrous material (10), an opaque layer (12) of opaque material and a layer of translucent plastics material (14), wherein a first side of the layer of opaque material (1) is coupled to a first side of a layer of fibrous material (10) and the layer of plastics material (14) is located against a second side of the layer of opaque material (12);
a composite material adhered to a second side of the composite sheet material,
wherein the second side of the opaque layer of opaque material (12) is viewable through the layer of plastics material (14),
wherein the opaque layer (12) is a different colour to the colour of the fibrous material and the opaque layer and the layer of plastics material (14) cooperate to provide the composite sheet material with a coloured appearance,
wherein the first side of the layer of fibrous material (10) is textured and contours of the second side of the opaque material correspond to the textured shape of the first side of the layer of fibrous material (10), and
a prepreg material (20), wherein the composite material has been located against the second side of the fibrous material as a pre-preg material (20), and wherein the composite material and the composite sheet material have been cured and/or formed together to form the composite structure.

12. The composite structure of claim 11, wherein the fibrous material (10) comprises carbon fibre.

13. The composite structure of claim 11 or claim 12, wherein the opaque layer (12) consists of one of: aluminium, nickel, chromium, tin, indium, silver, gold and platinum.

## Patentansprüche

1. Verfahren zur Herstellung einer Verbundstruktur, umfassend:
Formen eines Verbundplattenmaterials in eine gewünschte nicht-ebene Form, wobei das Verbundplattenmaterial eine Schicht aus Fasermaterial (10), eine opake Schicht (12) aus opaken Material und eine Schicht aus transluzentem Kunststoffmaterial (14) umfasst, wobei eine erste Seite der Schicht aus opaken Material (1) mit einer ersten Seite einer Schicht aus Fasermaterial (10) verbunden ist und die Schicht aus Kunststoffmaterial (14) an einer zweiten Seite der Schicht aus opaken Material (12) anliegt;
Aufbringen eines Prepregs auf eine zweite Seite der Schicht aus Fasermaterial; und
Aushärten und/oder Formen des Prepregs und des Verbundplattenmaterials, um die Verbundstruktur zu bilden,
wobei die Seite der Schicht aus opakem Material (12) durch die Schicht aus Kunststoffmaterial (14) hindurch sichtbar ist,
wobei die opake Schicht (12) eine andere Farbe aufweist als das Fasermaterial und die opake Schicht (12) sowie die Schicht aus transluzentem Kunststoffmaterial (14) zusammenwirken, um dem Verbundplattenmaterial ein farbiges Erscheinungsbild bereitzustellen, und
wobei die erste Seite der Faserschicht (10) strukturiert ist, und
wobei die Schicht aus opakem Material (12) auf die erste Seite der Faserschicht (10) aufgebracht wird, so dass die Konturen der Seite des opaken Materials der strukturierten Form der ersten Seite der Schicht aus Fasermaterial (10) entsprechen.

2. Verfahren nach Anspruch 1, ferner umfassend die Herstellung des Verbundplattenmaterials, wobei die Herstellung umfasst:
Aufbringen (102) der opaken Schicht (12) auf die erste Seite der Schicht aus Fasermaterial (10);
Aufbringen (104; 204) der Schicht aus transluzentem Kunststoffmaterial (14) auf die der Schicht aus Fasermaterial (10) gegenüberliegende Seite des opaken Materials (12).

3. Verfahren nach einem der vorhergehenden Ansprüche, wobei die opake Schicht (12) aus einem der folgenden Materialien besteht: Aluminium, Nickel, Chrom, Zinn, Indium, Silber, Gold und Platin.

4. Verfahren nach einem der vorhergehenden Ansprüche, wobei das Verbundplattenmaterial nach einem der vorhergehenden Ansprüche, wobei das Fasermaterial mindestens eines der folgenden Materialien umfasst: Kohlefaser, Glasfaser, Aramid, Polypropylen und Bor.

5. Verfahren nach einem der vorhergehenden Ansprüche, wobei das Fasermaterial Kohlefasern umfasst.

6. Verfahren nach Anspruch 2 oder nach einem der Ansprüche 4 und 5, sofern dieser von Anspruch 2 abhängt, wobei das Aufbringen der opaken Schicht (12) aus opakem Material durch Aufdampfen des opaken Materials auf die erste Seite der Schicht (10) aus Fasermaterial erfolgt.

7. Verfahren nach einem der vorhergehenden Ansprüche, wobei das Kunststoffmaterial ein duroplastisches Material ist und das duroplastische Material nach dem Aufbringen des duroplastischen Materials teilweise ausgehärtet wird.

8. Verfahren nach einem der vorhergehenden Ansprüche, wobei das Kunststoffmaterial der transluzenten Schicht (14) ein Thermoplast ist und wobei das Formen das Erwärmen des Verbundplattenmaterials über den Erweichungspunkt des Thermoplasts hinaus umfasst.

9. Verfahren nach einem der vorhergehenden Ansprüche, wobei die Schicht aus transluzentem Kunststoffmaterial aus einem zu einer Folie extrudierten Thermoplasten gebildet ist, wobei die Folie eine Dicke von 0,1 mm bis 10 mm aufweist.

10. Verfahren nach Anspruch 9, wobei die Folie eine Dicke von 0,25 mm bis 0,3 mm aufweist.

11. Verbundstruktur, umfassend:
ein geformtes, nicht-ebenes Verbundplattenmaterial, umfassend:
eine Schicht aus Fasermaterial (10), eine opake Schicht (12) aus opakem Material und eine Schicht aus transluzentem Kunststoffmaterial (14), wobei eine erste Seite der Schicht aus opakem Material (1) mit einer ersten Seite einer Schicht aus Fasermaterial (10) verbunden ist und die Schicht aus Kunststoffmaterial (14) an einer zweiten Seite der Schicht aus opakem Material (12) anliegt;
ein Verbundmaterial, das auf einer zweiten Seite des Verbundplattenmaterials aufgebracht wird,
wobei die zweite Seite der opaken Schicht aus opakem Material (12) durch die Schicht aus Kunststoffmaterial (14) hindurch sichtbar ist,
wobei die opake Schicht (12) eine andere Farbe als das Fasermaterial aufweist und die opake Schicht sowie die Schicht aus Kunststoffmaterial (14) zusammenwirken, um dem Verbundplattenmaterial ein farbiges Erscheinungsbild bereitzustellen,
wobei die erste Seite der Schicht aus Fasermaterial (10) strukturiert ist und die Konturen der zweiten Seite des opaken Materials der strukturierten Form der ersten Seite der Schicht aus Fasermaterial (10) entsprechen, und
ein Prepreg-Material (20), wobei das Verbundmaterial als Prepreg-Material (20) an der zweiten Seite des Fasermaterials angeordnet wurde und wobei das Verbundmaterial und das Verbundplattenmaterial gemeinsam ausgehärtet und/oder geformt wurden, um die Verbundstruktur zu bilden.

12. Verbundstruktur nach Anspruch 11, wobei das Fasermaterial (10) Kohlefasern umfasst.

13. Verbundstruktur nach Anspruch 11 oder Anspruch 12, wobei die opake Schicht (12) aus einem der folgenden Materialien besteht: Aluminium, Nickel, Chrom, Zinn, Indium, Silber, Gold und Platin.

## Revendications

1. Procédé de fabrication d'une structure composite, comprenant : le façonnage d'un matériau en feuille composite en une forme non plane requise, le matériau en feuille composite comprenant une couche de matériau fibreux (10), une couche opaque (12) de matériau opaque et une couche de matière plastique translucide (14), dans lequel un premier côté de la couche de matériau opaque (1) est couplé à un premier côté d'une couche de matériau fibreux (10) et la couche de matière plastique (14) est située contre un second côté de la couche de matériau opaque (12) ;
le collage d'un préimprégné sur un second côté de la couche de matériau fibreux ;
et le durcissement et/ou le formage du préimprégné et du matériau en feuille composite pour former la structure composite,
dans lequel le côté de la couche de matériau opaque (12) peut être vu à travers la couche de matière plastique (14),
dans lequel la couche opaque (12) est d'une couleur différente de celle du matériau fibreux, et la couche opaque (12) et la couche de matière plastique translucide (14) agissent conjointement pour conférer au matériau en feuille composite un aspect coloré,
et dans lequel le premier côté de la couche fibreuse (10) est texturé,
et dans lequel la couche de matériau opaque (12) est appliquée sur le premier côté de la couche fibreuse (10) de telle sorte que les contours du côté du matériau opaque correspondent à la forme texturée du premier côté de la couche de matériau fibreux (10).

2. Procédé selon la revendication 1, comprenant en outre la fabrication du matériau en feuille composite, dans lequel la fabrication comprend :
l'application (102) de la couche opaque (12) sur le premier côté de la couche de matériau fibreux (10) ;
l'application (104 ; 204) de la couche de matière plastique translucide (14) sur le côté du matériau opaque (12) situé à l'opposé de la couche de matériau fibreux (10).

3. Procédé selon l'une quelconque des revendications précédentes, dans lequel la couche opaque (12) est constituée de l'un des éléments suivants : l'aluminium, le nickel, le chrome, l'étain, l'indium, l'argent, l'or et le platine.

4. Procédé selon l'une quelconque des revendications précédentes, dans lequel le matériau en feuille composite selon l'une quelconque des revendications précédentes comprend au moins l'un des éléments suivants : de la fibre de carbone, de la fibre de verre, de l'aramide, du polypropylène et du bore.

5. Procédé selon l'une quelconque des revendications précédentes, dans lequel le matériau fibreux comprend de la fibre de carbone.

6. Procédé selon la revendication 2 ou selon l'une quelconque des revendications 4 et 5 lorsqu'elles dépendent de la revendication 2, dans lequel l'application de la couche opaque (12) de matériau opaque est réalisée par dépôt en phase vapeur du matériau opaque sur le premier côté de la couche (10) de matériau fibreux.

7. Procédé selon l'une quelconque des revendications précédentes, dans lequel la matière plastique est un matériau thermodurcissable, et après l'application du matériau thermodurcissable, celui-ci est partiellement durci.

8. Procédé selon l'une quelconque des revendications précédentes, dans lequel la matière plastique de la couche translucide (14) est un thermoplastique, dans lequel le formage comprend le chauffage du matériau en feuille composite au-dessus du point de ramollissement du thermoplastique.

9. Procédé selon l'une quelconque des revendications précédentes, dans lequel la couche de matière plastique translucide est formée d'un thermoplastique extrudé sous forme de film, dans lequel le film a une épaisseur comprise entre 0,1 mm et 10 mm.

10. Procédé selon la revendication 9, dans lequel le film a une épaisseur comprise entre 0,25 mm et 0,3 mm.

11. Structure composite comprenant :
un matériau en feuille composite moulé et non plan comprenant :
une couche de matériau fibreux (10), une couche opaque (12) de matériau opaque et une couche de matière plastique translucide (14), dans laquelle un premier côté de la couche de matériau opaque (1) est couplé à un premier côté d'une couche de matériau fibreux (10) et la couche de matière plastique (14) est située contre un second côté de la couche de matériau opaque (12) ;
un matériau composite collé sur un second côté du matériau en feuille composite, dans laquelle le second côté de la couche opaque (12) peut être vu à travers la couche de matière plastique (14),
dans laquelle la couche opaque (12) est d'une couleur différente de celle du matériau fibreux et la couche opaque ainsi que la couche de matière plastique (14) coopèrent pour conférer au matériau en feuille composite un aspect coloré,
dans laquelle le premier côté de la couche de matériau fibreux (10) est texturé et les contours du second côté du matériau opaque correspondent à la forme texturée du premier côté de la couche de matériau fibreux (10), et
un matériau préimprégné (20), dans laquelle le matériau composite a été positionné contre le second côté du matériau fibreux sous forme de matériau préimprégné (20), et dans laquelle le matériau composite et le matériau en feuille composite ont été durcis et/ou moulés ensemble pour former la structure composite.

12. Structure composite selon la revendication 11, dans laquelle le matériau fibreux (10) comprend de la fibre de carbone.

13. Structure composite selon la revendication 11 ou la revendication 12, dans laquelle la couche opaque (12) est constituée de l'un des éléments suivants :
l'aluminium, le nickel, le chrome, l'étain, l'indium, l'argent, l'or et le platine.
